# EUROPÄISCHE PATENTSCHRIFT

(11) **EP 2 993 037 B1**
(45) Veröffentlichungstag und Bekanntmachung des Hinweises auf die Patenterteilung: **15.04.2020**
(21) Anmeldenummer: 15174479.4
(22) Anmeldetag: 30.06.2015
(51) Int. Cl.: B32B 15/08, B32B 3/14, B32B 15/16, B32B 15/18, B32B 15/20, B32B 3/28

(54) **GEFÜLLTE METALLSANDWICHSTRUKTUR**
FILLED METAL SANDWICH STRUCTURE
STRUCTURE EN SANDWICH METALLIQUE PLEINE

(30) Priorität: 02.09.2014 DE 202014104104 U
(43) Veröffentlichungstag der Anmeldung: 09.03.2016
(73) Patentinhaber: Metawell GmbH, 86633 Neuburg/Donau (DE)
(72) Erfinder: SCHIEKEL, Michael, 86633 Neuburg an der Donau (DE); WESOLOWSKI, Klemens, 86633 Neuburg an der Donau (DE); FÄHRROLFES, Herbert, 86697 Oberhausen (DE)
(74) Vertreter: Wunderlich & Heim Patentanwälte Partnerschaftsgesellschaft mbB

(56) Entgegenhaltungen:
- EP-A1- 1 575 769
- EP-A1- 2 122 081
- EP-A1- 2 740 588
- US-A1- 2006 207 212
- DATABASE WPI Week 199228 Thomson Scientific, London, GB; AN 1992-232461 XP002752567, -& SU 1 682 066 A1 (URALMASH PRODN ASSOC) 7. Oktober 1991 (1991-10-07)

## Beschreibung

Die Erfindung betrifft eine Metallsandwichstruktur aus einer ersten und einer zweiten Deckschicht sowie einer zwischen der ersten und der zweiten Deckschicht angeordneten Kernschicht, gemäß Oberbegriff des Anspruches 1.

Gattungsgemäße Sandwichplatten werden beispielsweise im Schienenfahrzeugbau sowohl für den Innenbereich als auch Außenbereich eingesetzt. Ein weiteres Einsatzgebiet ist der Schiffsbau sowie auch der automotive Fahrzeugbau. Der Vorteil gattungsgemäßer Metallsandwichplatten ist ihre relativ hohe Stabilität bei einem relativ geringen Gewicht. Daher sind auch andere Anwendungsbereiche wie beispielsweise Fassadenverkleidungen bekannt.

Herstellungsverfahren für gattungsgemäße Sandwichstrukturen sind beispielsweise in der WO 2011/100992 A1 oder der EP 1 375 023 A1 beschrieben.

Die Stabilität der Metallsandwichstruktur wird herkömmlicherweise maßgeblich durch die verwendete Kontur der innenliegenden Kernschicht erreicht.

In der EP 2 122 081 A1 ist eine Metallsandwichstruktur beschrieben, die zwei äußere Metallplatten aufweist, zwischen denen ein Kompositkern eingebaut ist, wobei dieser eine äußere Schicht aus Kunststoffmaterial aufweist und einen inneren Teil, der aus gewelltem Metall ausgebildet ist. Die dabei gebildeten Wellen sind mit einem Schaum oder einem leichtgewichtigen Füllmaterial ausgefüllt.

In der EP 1 575 769 A1 ist eine Laminatstruktur beschrieben, die mindestens eine flache Plattenschicht und eine darauf mittels Punktschweißen befestigte Wellenstruktur aufweist, so dass unterhalb der Wellenstruktur Kanäle gebildet werden. Um die Dichte des Laminats zu erhöhen, wird in diese Kanäle feiner Sand eingebracht, der primär runde Sandkörner aufweist, die nicht für eine bessere Komprimierbarkeit geeignet sind.

Aus der SU 1 682 066A1 ist ein Zwischenprodukt aus gewellten Metallbändern bekannt, die zur Erzeugung kapillarer Zwischenräume zunächst nur zusammengepresst sind und die kapillaren Zwischenräume mit einem Pulver gefüllt werden, das nach dem Verlöten der Metallbänder wieder entfernt wird. Es wird hierbei keine stabile und belastbare Metallsandwichstruktur erreicht.

Ein anderes Sandwichbauteil ist aus der EP 2 740 588 A1 bekannt. Dieses Sandwichbauteil weist zwar eine untere und obere Deckschicht auf, zwischen denen eine Kernschicht mit nach unten offener Struktur angeordnet wird. In diese offene Struktur werden sphärische Beimischungsbestandteile mit unterschiedlicher Größe, beispielsweise PUR-Schaumkugeln, Schaumhohlkugeln, Glaskugeln oder andere Füllmaterialien eingebracht, die jedoch keiner weiteren Verdichtung unterzogen werden.

Eine andere Art von Sandwichstruktur ist in der US 2006/207212 A1 beschrieben. Die oberen und unteren plattenartigen Deckstrukturen sind hierbei mit zungenartigen Eingriffselementen in entsprechende Ausnehmungen benachbarter Platten eingesetzt, um eine stabile Verbindung miteinander zu schaffen. Gleiches gilt für die dreieckartigen zwischen den Deckstrukturen gebildeten Kanäle, die zudem mit Schaummaterial oder Metall- oder Plastikmaterial gefüllt werden können.

Die genannten Sandwichstrukturen weisen daher Nachteile auf, so dass im Hinblick auf ihre Herstellung und Stabilität diese Nachteile überwunden werden sollten.

Der Erfindung liegt die **Aufgabe** zugrunde, eine Metallsandwichstruktur mit einer erhöhten Stabilität zu schaffen, ohne hierbei das Gesamtgewicht der Metallsandwichstruktur unverhältnismäßig stark zu erhöhen.

Diese Aufgabe wird erfindungsgemäß durch eine Metallsandwichstruktur mit den Merkmalen des Anspruchs 1 gelöst.

Weitere vorteilhafte Ausführungen sind in den abhängigen Ansprüchen, der Beschreibung sowie den Figuren und in deren Erläuterung angegeben.

Nach Anspruch 1 wird eine Metallsandwichstruktur dadurch gebildet, dass die ersten und die zweiten Kanäle mit einem schüttbaren Füllmaterial gefüllt sind.

Ein Grundgedanke der Erfindung kann darin gesehen werden, die Druckfestigkeit der Metallsandwichstruktur dadurch zu erhöhen, dass beide Kanäle mit einem geeigneten Material gefüllt sind. Hierdurch wird erreicht, dass bei einem Druck auf die erste oder zweite Deckschicht die Kanäle, welche gefüllt ausgebildet sind, nicht oder nur weitaus geringer komprimiert werden können, als dies bei einer gattungsgemäßen Metallsandwichstruktur der Fall ist.

Die Verwendung eines schüttbaren Füllmaterials ermöglicht es, die bisherigen Herstellungsverfahren unverändert zu lassen und lediglich einen weiteren Schritt, nämlich das zusätzliche Auffüllen der ersten und zweiten Kanäle vorzusehen.

In einer Ausführungsform sind sowohl die ersten Kanäle wie auch die zweiten Kanäle mit dem schüttbaren Füllmaterial gefüllt. Hierdurch wird eine noch höhere Stabilität der so entstehenden Metallsandwichstruktur erreicht. Außerdem vereinfacht sich der Herstellungsvorgang, da nicht zwischen gefüllten und ungefüllten Kanälen unterschieden werden muss und somit ein einfacheres Auffüllen ermöglicht wird.

Grundsätzlich ist es möglich, die ersten und zweiten Kanäle mit jeweils unterschiedlichen Füllmaterialien zu füllen, um hierdurch besondere Eigenschaften zu erreichen. Wie jedoch erläutert, ist es aufgrund des einfacheren Herstellungsverfahrens vorteilhaft, die ersten sowie die zweiten Kanäle mit demselben Material zu verfüllen.

Als schüttbares Füllmaterial kann beispielsweise Sand, insbesondere Quarzsand, verwendet werden. Untersuchungen und Versuche haben ergeben, dass die Füllung mit Sand ausreicht, um die gewünschten höheren Stabilitätseigenschaften zu erreichen. Auch stellt Sand einen relativ einfach zu handhabenden und günstigen Rohstoff dar.

Als schüttbares Füllmaterial wird ein kantiges Material verwendet. Hierbei kann beispielsweise Bruch- oder Brechsand eingesetzt werden. Vorteilhaft bei der Verwendung eines kantigen Materials, insbesondere scharfkantiger Sande, im Vergleich zu nichtkantigen Material, wie Rundsanden, ist, dass dieses wesentlich effizienter und stärker komprimiert werden kann, so dass sich in den Kanälen weniger Hohlräume befinden. Dies wiederum erhöht die Stabilität der Metallsandwichstruktur, da die Kanäle so deutlich besser und dichter gefüllt sind.

Grundsätzlich kann ein beliebiges schüttfähiges Füllmaterial verwendet werden. Vorteilhaft ist es jedoch, wenn das schüttfähige Füllmaterial eine Körnung von etwa 0,03 mm bis 0,6 mm hat. Eine Rohdichte zwischen 2,0 t/m³ und 3,0 t/m³, insbesondere 2,6 t/m³, wird bevorzugt. Aufwändige Untersuchungen haben ergeben, dass ein schüttfähiges Füllmaterial mit diesen angegebenen Parametern ein besonders gutes Verhältnis zwischen erhöhter Stabilität und Erhöhung des Gewichtes hervorbringt. Mit anderen Worten kann mit einem Füllmaterial, welches diese Eigenschaften aufweist, mit möglichst geringem Gewichtszuwachs ein möglichst großer Stabilitätszuwachs erreicht werden.

In einer bevorzugten Ausführungsform sind die ersten und zweiten Kanäle an den Stirnseiten der Metallsandwichstruktur verschlossen ausgebildet. Die Kanäle können beispielsweise mittels eines Klebebandes, einer angeklebten oder angeschweißten Blechstruktur, wie ein Blechband, oder mittels eines U-Profiles verschlossen werden. Das U-Profil kann in einfacher Weise derart auf die Seiten der Metallsandwichstruktur aufgesteckt werden, dass es auf den Außenseiten der beiden Deckschichten mit seinen Schenkeln und an der Seite mit den offenen Kanälen mit seiner Basis zu liegen kommt. Selbstverständlich kann auch eine Kombination der verschiedenen hier angeführten Verschlusstechniken oder andere Techniken zum Verschluss der Kanäle verwendet werden.

Es hat sich herausgestellt, dass eine gute Erhöhung der Gesamtstabilität der Metallsandwichstruktur erreicht wird, wenn das schüttbare beziehungsweise schüttfähige Füllmaterial in den ersten und/oder zweiten Kanälen mit einer Rüttelfrequenz im Bereich von 10 Hz bis 500 Hz, insbesondere im Bereich von 30 Hz bis 200 Hz bevorzugt im Bereich von 50 Hz bis 80 Hz verdichtet wird. Derartige Frequenzen erreichen eine ausreichend gute Verdichtung des Füllmaterials, insbesondere bei der Verwendung von Quarzsand, ohne das Material zu stark zu verdichten. Bei einer zu starken Verdichtung entsteht kein oder nur noch kaum Stabilitätszuwachs für die Metallsandwichstruktur.

Mittels der bevorzugten Rüttelfrequenzen kann beim Einfüllen eine ausreichende Setzung des schüttbaren Füllmaterials in den ersten und/oder zweiten Kanälen erreicht werden. Eine derartige Setzung wird bevorzugt, da die hierdurch entstehende Füllung einen relativ hohen Stabilitätszuwachs ermöglicht, ohne das Gesamtgewicht zu stark zu erhöhen.

Als Material für die beiden Deckschichten sowie für die Kernschicht eignet sich insbesondere Aluminium oder Stahl.

Die Kernschicht weist eine periodisch gewellte Struktur auf und kann bevorzugt im Querschnitt eine wellenförmige, insbesondere sinusförmige Struktur, eine trapezförmige Struktur, eine dreieckförmige Struktur oder rechteckförmige Struktur aufweisen. Es sind auch Strukturen beliebiger Polygonzüge möglich. Grundsätzlich ist im Sinne der Erfindung unter einer gewellten Struktur nicht zwingend eine Struktur mit einer Wellenform, beispielsweise einer sinusartigen Form, zu verstehen, sondern wesentlich hierbei ist, dass die Struktur Täler und Kämme aufweist, zwischen denen sich das Material der Kernstruktur jeweils erstreckt.

Neben der Erhöhung der Gesamtstabilität der Metallsandwichstruktur hat sich auch herausgestellt, dass durch das Verfüllen beziehungsweise Befüllen der ersten und zweiten Kanäle eine akustisch dämpfende und/oder dämmende Gesamtstruktur entsteht. Mit anderen Worten leitet eine derart gefüllte Metallsandwichstruktur den Schall schlechter als eine Struktur ohne Füllung. In diesem Zusammenhang hat sich herausgestellt, dass eine Füllung mit den oben angegebenen Parametern in Bezug auf die Geräuschabsorption beziehungsweise -dämmung zu bevorzugen ist. Das bedeutet, dass gerade im Schienenfahrzeugbau eine bessere Dämpfung und Dämmung der doch sehr lauten Fahrgeräusche ohne zusätzlichen Aufwand erreicht werden kann.

Die Erfindung wird nachfolgend anhand von Ausführungsbeispielen und schematischen Zeichnungen näher erläutert. Hierbei zeigen:
- Fig. 1: eine perspektivische Ansicht eines Ausschnitts einer erfindungsgemäßen Metallsandwichstruktur;
- Fig. 2: eine perspektivische Ansicht eines Ausschnitts einer weiteren erfindungsgemäßen Metallsandwichstruktur;
- Fig. 3: eine perspektivische Ansicht eines Ausschnitts einer weiteren erfindungsgemäßen Metallsandwichstruktur; und
- Fig. 4: eine perspektivische Ansicht eines Ausschnitts einer weiteren erfindungsgemäßen Metallsandwichstruktur.

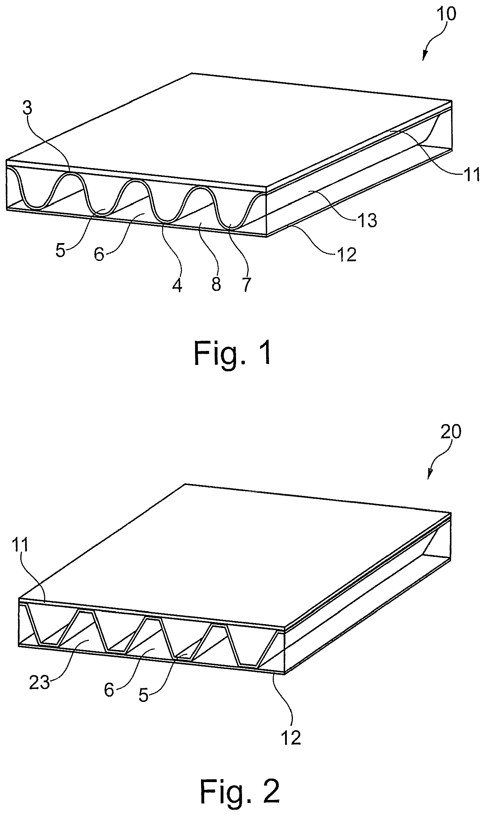

In den Figuren 1, 2, 3 und 4 ist jeweils eine perspektivische Ansicht eines Ausschnitts einer erfindungsgemäßen Metallsandwichstruktur 10, 20, 30, 40 dargestellt. Die Metallsandwichstruktur 10, 20, 30, 40 unterscheidet sich jeweils im Wesentlichen durch die Ausführung der Kernschicht 13, 23, 33, 43. Im Folgenden wird die Gesamtkonstruktion unter Bezugnahme auf die vier Figuren näher erläutert. In den Figuren sind gleiche Bauelemente mit denselben Bezugszeichen gekennzeichnet.

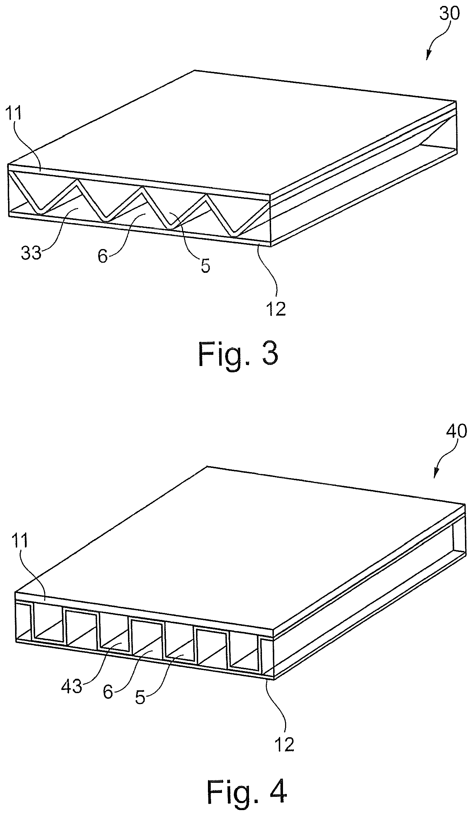

Die Kernschicht 13, 23, 33, 43 liegt jeweils zwischen der ersten Deckschicht 11 und der zweiten Deckschicht 12. In Fig. 1 weist die verwendete Kernschicht 13 eine sinusförmige Wellenstruktur auf. Demgegenüber ist in Fig. 2 die Kernschicht 23 mit einem trapezförmigen Querschnitt ausgebildet. In Fig. 3 ist eine Kernschicht 33 verwendet, welche eine dreieckförmige Grundstruktur aufweist. Abschließend ist in Fig. 4 eine rechteckförmige Ausbildung der Kernschicht 43 dargestellt.

Unabhängig von der verwendeten Kernschicht 13, 23, 33, 43 weist die dargestellte Metallsandwichstruktur 10, 20, 30, 40 eine Höhe von 5 mm bis zu 50 mm auf. Hierbei haben die erste 11 und die zweite 12 Deckschicht jeweils eine Materialstärke oder Blechstärke von 0,3 mm bis 2 mm. Die Material- beziehungsweise Blechdicke der Kernschicht 13, 23, 33, 43 beträgt in diesem Zusammenhang zwischen 0,1 mm und 1 mm.

Als Material sowohl für die beiden Deckschichten 11, 12 wie auch die verschieden ausgeführten Kernschichten 13, 23, 33, 43 wird ein Metall, bevorzugt Aluminium oder Stahl, verwendet. Selbstverständlich können auch größere oder geringere Höhen der somit aufgebauten Metallsandwichstruktur erreicht werden. Ebenso können auch andere Blechstärken sowohl für die Deckschichten wie auch für die Kernschicht verwendet werden. Maßgeblich ist hierbei der gewünschte zu erreichende Effekt, beispielsweise die zu erreichende Stabilität.

Die Kernschicht 13, 23, 33, 43 ist jeweils mit ihren Wellenkämmen 3 an der ersten Deckschicht 11 befestigt. Dies kann beispielsweise mittels eines adhäsiven Verfahrens erfolgen. Hierdurch wird ein erster Kanal 5 ausgebildet.

In ähnlicher Weise ist die Kernschicht 13, 23, 33, 43 mit ihren Wellentälern 4 mit der zweiten Deckschicht 12 verbunden, so dass ein zweiter Kanal 6 ausgebildet wird.

Diese beiden Kanäle 5, 6 sind jeweils mit einer Füllung 7, 8 gefüllt. Hierbei handelt es sich bevorzugt um kantigen Quarzsand mit einer Körnung zwischen 0,03 mm bis 0,6 mm und einer Rohdichte von etwa 2,6 t/m³.

Der Quarzsand wird in die Kanäle 5, 6 eingefüllt und mittels einer Rüttelfrequenz im Bereich von 50 Hz verdichtet, so dass eine ausreichende Setzung von beispielsweise ca. 20% vorhanden ist. Anschließend an das Einfüllen des Quarzsandes in die Kanäle 5, 6 werden die offenen Kanäle 5, 6 verschlossen. Dies kann beispielsweise durch ein Blech, Klebeband oder ein U-förmiges Profil erfolgen, welches auf die Metallsandwichstruktur 10, 20, 30, 40 aufgesteckt wird.

Mittels der erfindungsgemäßen Metallsandwichstruktur kann somit eine Metallsandwichstruktur mit einer erhöhten Stabilität hergestellt werden, ohne das Gewicht unverhältnismäßig stark zu erhöhen.

## Patentansprüche

1. Metallsandwichstruktur (10, 20, 30, 40)
aus einer ersten und einer zweiten Deckschicht (11, 12) sowie aus einer zwischen der ersten und der zweiten Deckschicht (11, 12) angeordneten Kernschicht (13, 23, 33, 43), welche eine gewellte Struktur mit Wellenkämmen (3) und Wellentälern (4) aufweist,
wobei durch die erste Deckschicht (11) und die Kernschicht (13, 23, 33, 43) erste Kanäle (5) und
durch die zweite Deckschicht (12) und die Kernschicht (13, 23, 33, 43) zweite Kanäle (6) ausgebildet sind,
**dadurch gekennzeichnet,**
**dass** die Kernschicht (13, 23, 33, 43) mit ihren Wellenkämmen (30) mittels eines adhäsiven Verfahrens an der ersten Deckschicht (11) befestigt und mit ihren Wellentälern (4) mit der zweiten Deckschicht (12) verbunden ist,
**dass** die ersten und die zweiten Kanäle (5, 6) mit einem schüttbaren Füllmaterial gefüllt sind,
**dass** das schüttbare Füllmaterial ein kantiges Material ist, und
**dass** das schüttbare Füllmaterial eine Körnung zwischen etwa 0,03 mm und etwa 0,6 mm aufweist.

2. Metallsandwichstruktur (10, 20, 30, 40) nach Anspruch 1,
**dadurch gekennzeichnet,**
**dass** das schüttbare Füllmaterial Sand, insbesondere Quarzsand, ist.

3. Metallsandwichstruktur (10, 20, 30, 40) nach einem der Ansprüche 1 oder 2,
**dadurch gekennzeichnet,**
**dass** das schüttbare Füllmaterial ein Bruch- oder Brechsand, ist.

4. Metallsandwichstruktur (10, 20, 30, 40) nach einem der Ansprüche 1 bis 3,
**dadurch gekennzeichnet,**
**dass** das schüttbare Füllmaterial eine Rohdichte zwischen 2,0 t/m³ und 3,0 t/m³, insbesondere 2,6 t/m³, aufweist.

5. Metallsandwichstruktur (10, 20, 30, 40) nach einem der Ansprüche 1 bis 4,
**dadurch gekennzeichnet,**
**dass** das schüttbare Füllmaterial in den ersten und/oder zweiten Kanälen (5, 6) mit einer Rüttelfrequenz von 10 Hz bis 500 Hz verdichtet wurde.

6. Metallsandwichstruktur (10, 20, 30, 40) nach einem der Ansprüche 1 bis 5,
**dadurch gekennzeichnet,**
**dass** die ersten und zweiten Kanäle (5, 6) an den Stirnseiten der Metallsandwichstruktur (10, 20, 30, 40) geschlossen ausgebildet sind.

7. Metallsandwichstruktur (10, 20, 30, 40) nach einem der Ansprüche 1 bis 6,
**dadurch gekennzeichnet,**
**dass** die ersten und zweiten Kanäle (5, 6) mittels eines U-Profils verschlossen sind.

8. Metallsandwichstruktur (10, 20, 30, 40) nach einem der Ansprüche 1 bis 7,
**dadurch gekennzeichnet,**
**dass** die Kernschicht (13, 23, 33, 43) im Querschnitt eine wellenförmige, eine trapezförmige, eine dreieckförmige oder eine rechteckförmige Struktur aufweist.

## Claims

1. Metal sandwich structure (10, 20, 30, 40),
consisting of a first and a second covering layer (11, 12) and
a core layer (13, 23, 33, 43) arranged between the first and the second covering layer (11, 12), the core layer (13, 23, 33, 43) having a waved structure comprising wave crests (3) and wave troughs (4),
wherein first channels (5) are formed by the first covering layer (11) and the core layer (13, 23, 33, 43) and
second channels (6) are formed by the second covering layer (12) and the core layer (13, 23, 33, 43),
**characterised in**
**that** the core layer (13, 23, 33, 43) is fixed with its wave crests (3) on the first covering layer (11) by means of an adhesive method and connected with its wave troughs (4) on the second covering layer (12),
at least the first and the second channels (5, 6) are filled with a pourable filler material,
**that** the pourable filler material is an edged material and
**that** the pourable filler material has a grain size of between 0.03 mm to 0.6 mm.

2. Metal sandwich structure (10, 20, 30, 40) according to claim 1,
**characterised in that**
the pourable filler material is sand, in particular quartz sand.

3. Metal sandwich structure (10, 20, 30, 40) according to one of claims 1 or 2,
**characterised in that**
the pourable filler material is natural sand or man-made crushed sand.

4. Metal sandwich structure (10, 20, 30, 40) according to one of claims 1 to 3,
**characterised in that**
the pourable filler material has a bulk density of between 2.0 t/m³ and 3.0 t/m³, in particular 2.6 t/m³.

5. Metal sandwich structure (10, 20, 30, 40) according to one of claims 1 to 4,
**characterised in that**
the pourable filler material has been compressed in the first and / or second channels (5, 6) with a vibration frequency of from 10 Hz to 500 Hz.

6. Metal sandwich structure (10, 20, 30, 40) according to one of claims 1 to 5,
**characterised in that**
the first and second channels (5, 6) are formed closed at the front faces of the metal sandwich structure (10, 20, 30, 40).

7. Metal sandwich structure (10, 20, 30, 40) according to one of claims 1 to 6,
**characterised in that**
the first and second channels (5, 6) are closed by means of a U profile.

8. Metal sandwich structure (10, 20, 30, 40) according to one of claims 1 to 7,
**characterised in that**
the core layer (13, 23, 33, 43) has in its cross-section a wave-form, trapezoidal, triangular or rectangular structure.

## Revendications

1. Structure en sandwich métallique (10, 20, 30, 40) constituée d'une première et d'une deuxième couche de revêtement (11, 12) ainsi que d'une couche centrale (13, 23, 33, 43) disposée entre les première et deuxième couches qui possède une structure ondulée avec des crêtes (3) et des creux (4), dans laquelle des premiers canaux (5) sont formés par la première couche de revêtement (11) et la couche centrale (13, 23, 33, 43) et des deuxièmes canaux (6) par la deuxième couche de revêtement (12) et la couche centrale (13, 23, 33, 43),
**caractérisée en ce que**
la couche centrale (13, 23, 33, 43) est fixée par ses crêtes (30) à la première couche de revêtement (11) au moyen d'un procédé adhésif et par ses creux (4) à la deuxième couche de revêtement (12),
les premiers et deuxièmes canaux (5, 6) sont remplis d'un matériau de rembourrage en vrac,
le matériau de rembourrage en vrac est un matériau anguleux et
le matériau de rembourrage en vrac possède une granulométrie d'environ 0,03 mm à environ 0,6 mm.

2. Structure en sandwich métallique (10, 20, 30, 40) selon la revendication 1,
**caractérisée en ce que**
le matériau de rembourrage en vrac est en particulier du sable siliceux.

3. Structure en sandwich métallique (10, 20, 30, 40) selon une des revendications 1 ou 2,
**caractérisée en ce que**
le matériau de rembourrage en vrac est en particulier un sable concassé ou de concassage.

4. Structure en sandwich métallique (10, 20, 30, 40) selon une des revendications 1 à 3,
**caractérisée en ce que**
le matériau de rembourrage en vrac possède une densité de 2,0 t/m³ à 3,0 t/m³, en particulier de 2,6 t/m³.

5. Structure en sandwich métallique (10, 20, 30, 40) selon une des revendications 1 à 4,
**caractérisée en ce que**
le matériau de rembourrage en vrac dans les premiers et/ou deuxièmes canaux (5, 6) a été compacté avec une fréquence de vibration de 10 Hz à 500 Hz.

6. Structure en sandwich métallique (10, 20, 30, 40) selon une des revendications 1 à 5,
**caractérisée en ce que**
les premiers et deuxièmes canaux (5, 6) sont obturés sur les faces frontales de la structure en sandwich métallique (10, 20, 30, 40).

7. Structure en sandwich métallique (10, 20, 30, 40) selon une des revendications 1 à 6,
**caractérisée en ce que**
les premiers et deuxièmes canaux (5, 6) sont obturés au moyen d'un profilé en U.

8. Structure en sandwich métallique (10, 20, 30, 40) selon une des revendications 1 à 7,
**caractérisée en ce que**
la couche centrale (13, 23, 33, 43) présente en coupe transversale une structure ondulée, trapézoïdale, triangulaire ou rectangulaire.
